# FASCICULE DE BREVET EUROPEEN

(11) **EP 3 809 798 B1**
(45) Date de publication et mention de la délivrance du brevet: **26.04.2023**
(21) Numéro de dépôt: 20202035.0
(22) Date de dépôt: 15.10.2020
(51) Int. Cl.: H04W 88/08, H04W 28/08

(54) **RRH CONNECTÉE À DEUX BBU**
RRH AN ZWEI BBUS ANGESCHLOSSEN
RRH CONNECTED TO TWO BBUS

(30) Priorité: 17.10.2019 FR 1911583
(43) Date de publication de la demande: 21.04.2021
(73) Titulaire: THALES, 92400 Courbevoie (FR)
(72) Inventeur: MATHIEU, Christophe, 78141 Vélizy Cedex (FR); BROUET, Jérôme, 92622 Gennevilliers Cedex (FR)
(74) Mandataire: Lavoix

(56) Documents cités:
- EP-A1- 2 898 753
- EP-A1- 3 305 011
- WO-A1-2017/078770
- CN-A- 107 087 277
- CN-A- 109 819 478
- US-A1- 2017 257 833
- US-A1- 2019 097 724

## Description

La présente invention concerne un système de communication comprenant un réseau d'interconnexion et une pluralité de sites radio interconnectés via le réseau d'interconnexion.

L'invention concerne le domaine des radiocommunications mobiles, en particulier des radiocommunications selon la norme LTE (de l'anglais *Long Term Evolution*) définie par l'organisme de normalisation 3GPP (de l'anglais *3rd Génération Partnership Project*), ou une norme de communication postérieure au LTE par exemple associée à la cinquième génération de technologie réseau mobile (5G).

Les systèmes de communication conformes à une telle norme LTE présentent une architecture centralisée ou distribuée en une pluralité de sites radio, chaque site radio comportant son propre routeur de communication et sa ou ses propres stations de base, également appelées eNodeB (de l'anglais *evolved Node B*) selon la norme LTE par exemple.

Le terminal mobile, par exemple appelé UE (de l'anglais *User Equipment*) selon la norme LTE, est propre à être connecté à une station de base. Les sites radio sont interconnectés via un réseau d'interconnexion également compatible avec la norme LTE, notamment de quatrième et de cinquième génération.

De tels réseaux sont notamment utilisés pour mettre en oeuvre des communications tactiques entre des équipes militaires mobiles sur des zones d'intervention. Les sites radio sont alors par exemple mobiles, et par exemple déployés via une solution véhiculaire mobile.

La nature des informations transitant sur ces réseaux est notamment de plusieurs types : avec par exemple d'un côté les applications multimédia (voix, vidéo, données) entre différents utilisateurs, et de l'autre côté des échanges spécifiques et sécurisés entre les utilisateurs et un poste de commandement localisé en une position unique ou en plusieurs positions prédéterminée(s) du réseau.

Les systèmes de communication actuels ne répondent pas de manière optimale aux besoins spécifiques de communications, notamment tactiques, en termes de compromis performance radio/intégration véhiculaire.

EP3305011 décrit une pluralité de station de bases (RBSs) où une tête radio à distance (RRH) d'une station de base est connectée à une, deux ou plusieurs unités de traitement en bande base (DUs) d'un pool de DUs.

Le but de l'invention est de proposer un système de communication permettant une réduction du dimensionnement du matériel de communication transporté au sein de véhicules, et par là même un allègement de ces véhicules tout en garantissant une sécurité de communication et une résilience.

### RÉSUMÉ DE L'INVENTION

A cet effet, l'invention a pour objet un système de communication comprenant un réseau d'interconnexion et une pluralité de sites radio interconnectés via le réseau d'interconnexion, au moins un site radio comprenant au moins une première station de base dont une tête radio à distance est interconnectée à au moins deux unités de traitement en bande de base, la tête radio à distance de la première station de base, interconnectée à au moins deux unités de traitement en bande de base, étant localisée en haut de mât de ladite première station de base, une première unité de traitement en bande de base desdites au moins deux unités de traitement en bande de base étant localisée en pied de mât de ladite première station de base, une deuxième unité de traitement en bande de base desdites au moins deux unités de traitement en bande de base étant localisée en pied de mât d'une deuxième station de base distincte de ladite première station de base.

Suivant d'autres aspects avantageux de l'invention, le système de communication comprend une ou plusieurs des caractéristiques suivantes, prises isolément ou suivant toutes les combinaisons techniquement possibles :
- le réseau d'interconnexion est un réseau Ethernet fibré et/ou un réseau Ethernet par faisceaux hertziens ;
- la tête radio à distance est configurée pour répartir le trafic de données de communication géré par la première station de base entre la première unité de traitement en bande de base et la deuxième unité de traitement en bande de base en fonction de l'application de communication associée aux données de communication et/ou en fonction de l'identifiant du terminal de communication émetteur et/ou récepteur desdites données de communication ;
- la tête radio à distance est configurée pour répartir le trafic de données de communication, présentant un niveau d'intégrité de sécurité le plus élevé et/ou une durée de pertinence de données la plus élevée, vers la deuxième unité de traitement en bande de base localisée en pied de mât de la deuxième station de base distincte de ladite première station de base ;
- la tête radio à distance est connectée en haut de mât à un commutateur et dans lequel la tête radio à distance est configurée pour répartir le trafic de données de communication géré par la première station de base via ledit commutateur ;
la tête radio à distance comprend autant de ports de sortie distincts que de types d'applications de communication et/ou que de types d'identifiants de terminal en fonction desquels la répartition de trafic de donnée est mise en oeuvre ;
le protocole d'interconnexion entre la tête radio à distance et lesdites au moins deux unités de traitement en bande de base est un protocole évolué d'interface de radio publique commune eCPRI ou un protocole radio sur Ethernet RoE ;
- les critères de répartition de trafic sont définis, dans le champ flowlD de l'en-tête de trame de communication RoE, par un identifiant utilisateur et/ou par un identifiant d'application ;
- les critères de répartition de trafic sont définis, dans le champ PC_ID de l'en-tête de chaque paquet de données binaires transmis au sein d'une trame de communication eCPRI, par un identifiant utilisateur et/ou par un identifiant d'application ;
- le système comprend en outre une unité de supervision propre à configurer au moins la répartition de trafic de données de communication propre à être mise en oeuvre par chaque tête radio à distance et par chaque unité de traitement en bande de base de chaque site radio du système de communication.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig 1****]** la figure 1 est une représentation schématique d'un système de communication existant ;
- **[****Fig 2****]** la figure 2 est une représentation schématique générale d'un système de communication selon la présente invention ;
- **[****Fig 3****]** la figure 3 est une représentation schématique d'une configuration particulière d'un système de communication selon la présente invention ;
- **[****Fig 4****]** la figure 4 est une représentation schématique d'une trame de communication utilisée selon la présente invention.

L'invention concerne alors le domaine des radiocommunications, où les différents équipements communiquent entre eux par ondes radioélectriques. Dans la suite de la description, une connexion, respectivement une liaison, définira alors une connexion radioélectrique, respectivement une liaison radioélectrique, et les termes « connecté » ou « relié » s'entendront de manière radioélectrique ou radioélectriquement.

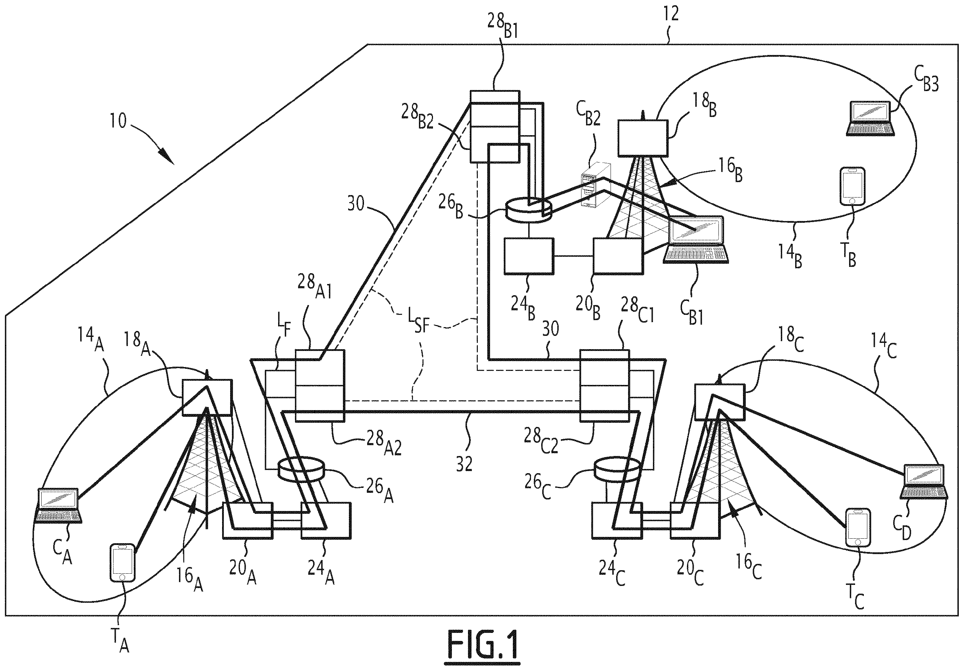

La figure 1 représente un système de communication 10 existant, comprenant un réseau d'interconnexion 12 notamment par faisceaux hertziens, plusieurs sites radio 14_{A}, 14_{B}, 14_{C} interconnectés via le réseau d'interconnexion 12 et un serveur de communication C_{B2} relié au réseau d'interconnexion 12, chaque site radio 14_{A}, 14_{B}, 14_{C} comportant au moins une station de base 16_{A}, 16_{B}, 16c, notée eNB, également appelée eNodeB (de l'anglais *evolved Node B*) selon la norme LTE.

Sur l'exemple d'architecture réseau de la figure 1, actuellement pour offrir le meilleur compromis performance radio/intégration véhiculaire, chaque station de base 16_{A}, 16_{B}, 16c comprend respectivement en haut de mât une tête radio à distance 18_{A}, 18_{B}, 18c (RRH de l'anglais *Remote Radio Head*) et en pied de mât une unité de traitement en bande de base 20_{A}, 20_{B}, 20c (BBU de l'anglais *Base Band Unit*) connectée à un coeur de réseau 24_{A}, 24_{B}, 24_{C} (EPC de l'anglais *Evolved Packet Core*), lui-même connecté à un routeur de communication 26_{A}, 26_{B}, 26c relié au routeur associé à chaque autre station de base 16_{A}, 16_{B}, 16c, le routeur de communication étant connecté au réseau d'interconnexion 12.

Des terminaux, notamment mobiles, présents au sein de chaque site radio 14_{A}, 14_{B}, 14_{C} sont reliés via des liaisons radioélectriques à la ou les stations de base du site radio considéré.

Par exemple, dans le site radio 14_{A} un terminal mobile correspondant par exemple à un ordinateur C_{A} et/ou à un téléphone T_{A} d'un ou de plusieurs utilisateur(s) en intervention sur une zone couverte par le site radio 14_{A} sont reliés par liaison radioélectrique à la station de base 16_{A}.

De manière similaire, dans le site radio 14_{C} un ordinateur C_{D} et un téléphone T_{C} d'un ou de plusieurs utilisateur(s) en intervention sur une zone couverte par le site radio 14_{C} sont reliés par liaison radioélectrique à la station de base 16c.

Dans le site radio 14_{B} un ordinateur C_{B3} et un téléphone T_{B} d'un ou de plusieurs utilisateur(s) en intervention sur une zone couverte par le site radio 14_{B} sont reliés par liaison radioélectrique à la station de base 16_{B} et le routeur 26_{B} est par ailleurs relié au serveur de communication C_{B2} et à poste de commandement C_{B1}.

La nature des informations transitant sur ces réseaux est notamment de plusieurs types : avec par exemple d'un côté les applications multimédia (voix, vidéo, données) entre différents utilisateurs, et de l'autre côté des échanges spécifiques et sécurisés entre les utilisateurs et un poste de commandement localisé en une position unique ou en plusieurs positions et prédéterminée du réseau tels que des échanges spécifiques associés au système C4I^{®} (de l'anglais *Computerised Command, Control, Communications and Intelligence).*

Sur l'exemple de la figure 1 représentant un système existant, chaque routeur de communication 26_{A}, 26_{B}, 26c est propre à prendre en compte la nature d'information échangée pour router spécifiquement une telle information au sein du réseau d'interconnexion 12.

En particulier, les informations spécifiques et sécurisées (i.e. tactiques) par exemple échangées du terminal mobile correspondant à l'ordinateur C_{A} du site radio 14_{A} au terminal de communication correspondant au poste de commandement C_{B1} du site radio 14_{B} transitent de l'ordinateur C_{A} à la tête radio à distance 18_{A} puis à l'unité de traitement en bande de base 20_{A} puis au coeur de réseau 24_{A} puis au routeur 26_{A} qui, au vu de la nature de ces informations destinées à un poste de commandement, les transmet à un dispositif de transport micro-onde correspondant à une ligne radio point à point 28_{A1}. La ligne radio point à point 28_{A1} selon le chemin spécifique 30 associé à cette nature d'information spécifique et sécurisée transmet au moyen d'une liaison sans fil L_{SF} ces informations à un dispositif de transport micro-onde correspondant à une ligne radio point à point 28_{B1} propre à remonter ses informations au routeur 26_{B} associé au site radio 14_{B}. Le routeur 26_{B} recevant de telles informations spécifiques et sécurisées les route ensuite vers le serveur de communication C_{B2} qui les redirige ensuite au poste de commandement C_{B1}. Le chemin 30 inverse est appliqué en cas de transmission du poste de commandement C_{B1} du site radio 14_{B} vers l'ordinateur C_{A} du site radio 14_{A}.

De même, les informations spécifiques et sécurisées par exemple échangées du terminal mobile correspondant à l'ordinateur C_{D} du site radio 14_{C} au terminal de communication correspondant au poste de commandement C_{B1} transitent de l'ordinateur C_{D} à la tête radio à distance 18c puis à l'unité de traitement en bande de base 20c puis au coeur de réseau 24_{C} puis au routeur 26c qui, au vu de la nature de ces informations, les transmet à un dispositif de transport micro-onde correspondant à une ligne radio point à point 28_{C1}. La ligne radio point à point 28c, selon le chemin spécifique 30 associé à cette nature d'information spécifique et sécurisée transmet au moyen d'une liaison sans fil L_{SF} ces informations à un dispositif de transport micro-onde correspondant à une ligne radio point à point 28_{B2} propre à remonter ses informations au routeur 26_{B} associé au site radio 14_{B}. Le routeur 26_{B} recevant de telles informations spécifiques et sécurisées les route ensuite vers le serveur de communication C_{B2} qui les redirige ensuite au poste de commandement C_{B1}. Le chemin 30 inverse est appliqué en cas de transmission du poste de commandement C_{B1} du site radio 14_{B} vers l'ordinateur C_{D} du site radio 14_{C}.

Par ailleurs, les informations, par exemple échangées du terminal mobile correspondant au téléphone T_{A} du site radio 14_{A} au terminal mobile correspondant au téléphone T_{C} du site radio 14_{C}, sont associées à des applications de téléphonies et/ou multimédia (voix, vidéo, données) et transitent du téléphone T_{A} à la tête radio à distance 18_{A} puis à l'unité de traitement en bande de base 20_{A} puis au coeur de réseau 24_{A} puis au routeur 26_{A} qui, au vu de la nature de ces informations multimédia destinées au téléphone T_{C}, les transmet à un dispositif de transport micro-onde correspondant à une ligne radio point à point 28_{A2}. La ligne radio point à point 28_{A2} selon le chemin spécifique 32 associé à cette nature d'information transmet au moyen d'une liaison sans fil L_{SF} ces informations à un dispositif de transport micro-onde correspondant à une ligne radio point à point 28_{C2} propre à remonter ses informations au routeur 26c associé au site radio 14_{C}. Le routeur 26c recevant de telles informations multimédia les route ensuite vers le coeur de réseau 24_{C} qui les redirige ensuite à l'unité de traitement en bande de base 20c propre à les retransmettre à la tête radio à distance 18c, elle-même propre à les transmettre au téléphone T_{C}. Le chemin 32 inverse est appliqué en cas de transmission du téléphone T_{C} du site radio 14_{C} vers le téléphone T_{A} du site radio 14_{A}.

Sur la figure 1 représentant un système existant, il apparaît qu'indépendamment de la nature des informations échangées au sein du réseau d'interconnexion 12, ces informations transitent systématiquement par un coeur de réseau 24_{A}, ou encore 24_{C} d'un site radio 14_{A} ou 14_{C} dépourvu de poste de commandement et dans lequel une radio/intégration véhiculaire est par exemple mise en oeuvre.

Autrement dit, le trafic 30 associé aux informations multimédia et le trafic 32 associé aux informations spécifiques et sécurisées transitent tous les deux systématiquement par le ou les coeurs de réseau 24_{A}, 24_{C} et les routeurs respectivement associés 26_{A}, 26c respectivement de chaque site radio 14_{A} ou 14_{C} dépourvus de poste de commandement, ce qui n'est pas optimal en termes de dimensionnement pour une radio/intégration véhiculaire et de sécurité notamment des informations spécifiques et sécurisées à destination du poste de commandement C_{B1}.

Plus précisément, selon l'exemple de système de communication existant 10 de la figure 1, la séparation des trafics en fonction de leur nature est mise en oeuvre au niveau IP (i.e. protocole Internet) notamment au niveau du coeur de réseau 24 ou en sortie de la station de base au niveau du routeur 26 associé.

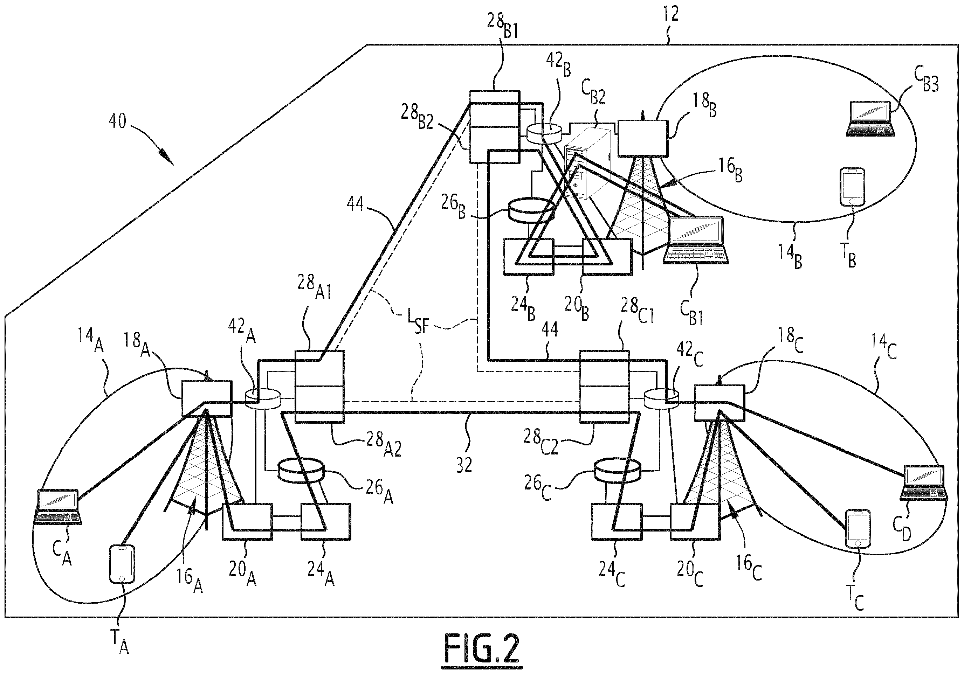

Sur la figure 2 représentative du système de communication 40 selon la présente invention, pour des raisons de simplicité, les éléments identiques à ceux de la figure 1 conservent une référence numérique identique.

Plus précisément, selon la présente invention le réseau d'interconnexion 12 est un réseau Ethernet fibré et/ou un réseau Ethernet par faisceaux hertziens.

Le système de communication 40 vise à pallier les inconvénients de dimensionnement et de sécurité associé au système de communication 10 existant de la figure 1 en séparant les trafics des informations de nature différentes.

Pour ce faire, les informations spécifiques et sécurisées échangées de l'ordinateur C_{A} du site radio 14_{A} au poste de commandement C_{B1} du site radio 14_{B} transitent de l'ordinateur C_{A} à la tête radio à distance 18_{A} puis directement à un routeur supplémentaire 42_{A} placé en tête de mât de la station de base 16_{A} (supplémentaire au regard de la figure 1) qui les transmet directement à la ligne radio point à point 28_{A1}. La ligne radio point à point 28_{A1} selon le chemin spécifique 44 associé à cette nature d'information spécifique et sécurisée transmet au moyen d'une liaison sans fil L_{SF} ces informations spécifiques et sécurisées à la ligne radio point à point 28_{B1} propre à remonter ses informations spécifiques et sécurisées au routeur supplémentaire 42_{B} associé au site radio 14_{B}. Le routeur supplémentaire 42_{B}, placé en tête de mât de la station de base 16_{B}, route ensuite ces informations spécifiques et sécurisées vers l'unité de traitement en bande de base 20_{B} qui les transmet au coeur de réseau 24_{B}. Le coeur de réseau 24_{B} transmet ensuite ces informations, via le routeur 26B, au serveur de communication C_{B2} qui les redirige ensuite au poste de commandement C_{B1}. Le chemin 44 inverse est appliqué en cas de transmission sécurisée du poste de commandement C_{B1} du site radio 14_{B} vers l'ordinateur C_{A} du site radio 14_{A}.

De même, les informations spécifiques et sécurisées par exemple échangées du terminal mobile correspondant à l'ordinateur C_{D} du site radio 14_{C} au terminal de communication correspondant au poste de commandement C_{B1} transitent de l'ordinateur C_{D} à la tête radio à distance 18c puis directement à un routeur supplémentaire 42_{C} (supplémentaire au regard de la figure 1), placé en tête de mât de la station de base 16c, qui les transmet directement à la ligne radio point à point 28ci. La ligne radio point à point 28c, selon le chemin spécifique 44 associé à cette nature d'information spécifique et sécurisée transmet au moyen d'une liaison sans fil L_{SF} ces informations spécifiques et sécurisées à la ligne radio point à point 28_{B2} propre à remonter ses informations spécifiques et sécurisées au routeur supplémentaire 42_{B} associé au site radio 14_{B}. Le routeur supplémentaire 42_{B} route ensuite ces informations spécifiques et sécurisées vers l'unité de traitement en bande de base 20_{B} qui les transmet au coeur de réseau 24_{B}. Le coeur de réseau 24_{B} transmet ensuite ces informations, via le routeur 26B, au serveur de communication C_{B2} qui les redirige ensuite au poste de commandement C_{B1}. Le chemin 30 inverse est appliqué en cas de transmission du poste de commandement C_{B1} du site radio 14_{B} vers l'ordinateur C_{D} du site radio 14_{C}.

En comparaison avec le système de communication 10 existant de la figure 1, le chemin de transmission 32 des informations associées à des applications de téléphonies et/ou multimédia (voix, vidéo, données) reste inchangé au sein du système de communication selon la présente invention.

Ainsi, selon le système de communication de la présente invention comprend au moins une première station de base, par exemple 16_{A} et/ou 16c dont respectivement une tête radio à distance, par exemple 18_{A} et/ou 18c, est interconnectée à au moins deux unités de traitement en bande de base.

En effet, dans le système de communication 40 selon la présente invention illustré par la figure 2, la tête radio à distance 18_{A} localisée en haut de mât de la station de base 16_{A}, est d'une part interconnectée à (i.e. propre à communiquer avec) l'unité de traitement en bande de base 20_{A} localisée en pied de mât de la station de base 16_{A} du site 14_{A} mais d'autre part également à l'unité de traitement en bande de base 20_{B} localisée en pied de mât de la station de base 16_{B} du site 14_{B}, ce qui est impossible selon l'architecture du système de communication 10 existant de la figure 1.

De même, dans le système de communication 40 selon la présente invention illustré par la figure 2, la tête radio à distance 18c localisée en haut de mât de la station de base 16c, est d'une part interconnectée à (i.e. propre à communiquer avec) l'unité de traitement en bande de base 20c localisée en pied de mât de la station de base 16c du site 14_{C} mais d'autre part également à l'unité de traitement en bande de base 20_{A} localisée en pied de mât de la station de base 16_{A} du site 14_{A} ce qui est impossible selon l'architecture du système de communication 10 existant de la figure 1.

Selon une alternative non représentée, les tête radio à distance 18_{A} et 18c sont installées à l'intérieur d'un véhicule portant ou embarquant la station de base associée 16_{A} et 16c respectivement.

Autrement dit, selon la présente invention *n* têtes radio à distance (RRH) sont interconnectées à *m* unités de traitement en bande de base (BBU) avec *m* et *n* entiers, *n*≥1, *m*≥2 et *m*>n.

En particulier, la tête radio à distance 18_{A} est configurée pour répartir le trafic de données de communication géré par la première station de base 16_{A} entre la première unité de traitement en bande de base 20_{A} et la deuxième unité de traitement en bande de base 20_{B} en fonction de l'application de communication (i.e. informations spécifique et sécurisées versus informations associées à des application de téléphonie et/ou multimédia) associée aux données de communication et/ou en fonction de l'identifiant du terminal de communication émetteur et/ou récepteur desdites données de communication.

Préférentiellement, la tête radio à distance 18_{A} est configurée pour répartir le trafic de données de communication, présentant un niveau d'intégrité de sécurité le plus élevé et/ou une durée de pertinence de données la plus élevée, vers la deuxième unité de traitement en bande de base 20_{B} localisée en pied de mât de la deuxième station de base 16_{B} distincte de ladite première station de base 16_{A}.

Ainsi selon cette variante, le trafic d'informations associé aux informations spécifiques et sécurisées, émises par, ou destinées à un poste de commandement, telle que des informations associées à des échanges spécifiques selon le système C4I^{®} est réparti par la tête radio à distance 18_{A} vers la deuxième unité de traitement en bande de base 20_{B} afin que les informations spécifiques et sécurisées restent transportées en bande de base, tandis que le trafic d'informations associées à des applications de téléphonies et/ou multimédia (voix, vidéo, données), présentant un niveau d'intégrité de sécurité moins élevé que celui associé au trafic d'informations associé aux informations spécifiques et sécurisées, est réparti par la tête radio à distance 18_{A} vers la première unité de traitement en bande de base 20_{A} et passe de ce fait par les couches IP locales.

De même, si l'on considère la communication d'informations de mission d'une part et la communication d'informations associées à des applications de téléphonies et/ou multimédia (voix, vidéo, données) d'autre part, les informations de mission présentent une durée de pertinence plus élevée que la durée de pertinence des d'informations associées à des applications de téléphonies et/ou multimédia (voix, vidéo, données). Selon la présente invention, le trafic d'informations de mission est alors propre à être réparti par la tête radio à distance 18_{A} vers la deuxième unité de traitement en bande de base 20_{B} afin que les informations spécifiques et sécurisées restent transportées en bande de base, tandis que le trafic d'informations associées à des applications de téléphonies et/ou multimédia (voix, vidéo, données) est réparti par la tête radio à distance 18_{A} vers la première unité de traitement en bande de base 20_{A} et passe de ce fait par les couches IP locales au sein du coeur de réseau 24_{A}.

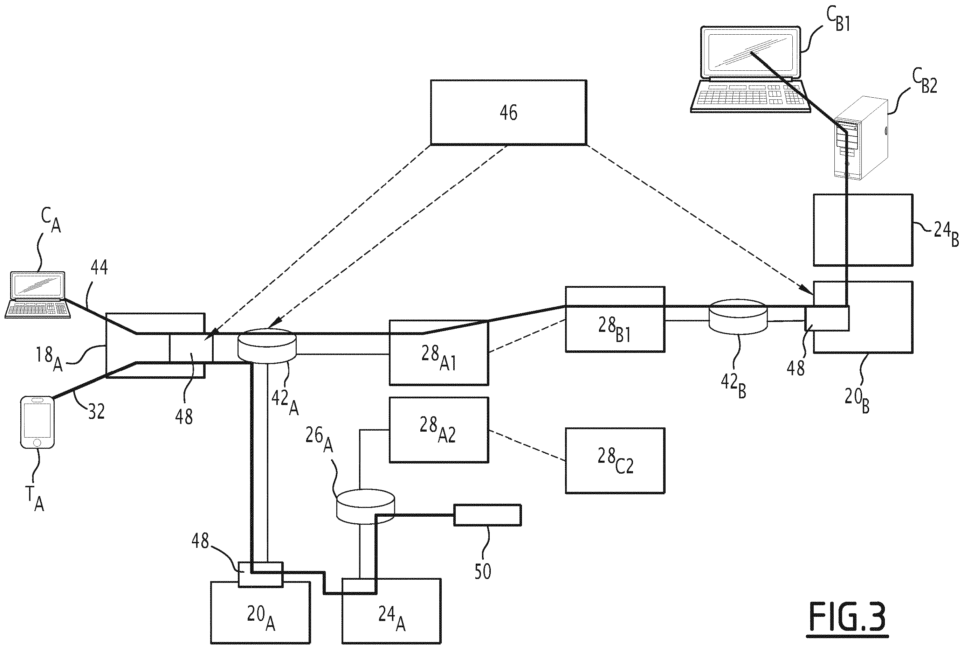

Tel qu'illustré par la figure 3, le système de communication 40 selon l'invention, comprend en outre une unité de supervision 46 propre à configurer au moins la répartition de trafic de données de communication propre à être mise en oeuvre par chaque tête radio à distance 18_{A}, 18c et par chaque unité de traitement en bande de base 20_{A}, 20_{B}, 20c de chaque site radio 14_{A}, 14_{B}, 14_{C} du système de communication 40.

Selon une première variante, la tête radio à distance 18_{A} est connectée en haut de mât à un commutateur 48, notamment un commutateur Ethernet, et la tête radio à distance est configurée pour répartir le trafic de données de communication géré par la première station de base via ce commutateur 48 entre la première unité de traitement en bande de base 20_{A} et le routeur 42_{A} interconnecté à la deuxième unité de traitement de base 20_{B}. Selon cette variante, l'unité de supervision 46 est également propre à configurer un tel commutateur Ethernet pour configurer le routage associé. Par exemple, l'unité de supervision 46 configure le routage mis en oeuvre au sein du commutateur 48 pour que les informations associées à des applications de téléphonies et/ou multimédia (voix, vidéo, données) et émises par le terminal mobile correspondant au téléphone T_{A} soient routées vers le commutateur 48 de la première unité de traitement en bande de base 20_{A}, puis vers le coeur de réseau 24_{A} jusqu'au serveur de communication 50 propre à traiter par exemple des appels (audio (i.e. voix), vidéo, etc.).

Selon une deuxième variante alternative non représentée et alternative de la première variante, la tête radio à distance 18_{A} comprend autant de ports de sortie distincts que de types d'applications de communication et/ou que de types d'identifiants de terminal en fonction desquels la répartition de trafic de donnée est mise en oeuvre. Autrement dit, selon ce deuxième aspect le commutateur de la première variante est remplacé par exemple par deux fibres distinctes de sortie de la tête radio à distance 18_{A} ou deux liaisons distinctes de sorties de la tête radio à distance 18_{A} associées respectivement d'une part aux informations spécifiques et sécurisées, émises par, ou destinées à un poste de commandement et d'autre part aux informations associées à des applications de téléphonies et/ou multimédia (voix, vidéo, données).

Selon un aspect particulier de l'invention, le protocole d'interconnexion entre la tête radio à distance 18_{A} et lesdites au moins deux unités de traitement en bande de base est un protocole évolué d'interface de radio publique commune eCPRI (de l'anglais *evolved Common Public Radio Interface).*

A titre d'alternative, le protocole d'interconnexion entre la tête radio à distance 18_{A} et lesdites au moins deux unités de traitement en bande de base est un protocole radio sur Ethernet RoE (de l'anglais *Radio Over Ethernet*) du type IEEE 19xx Radio Over Ethernet.

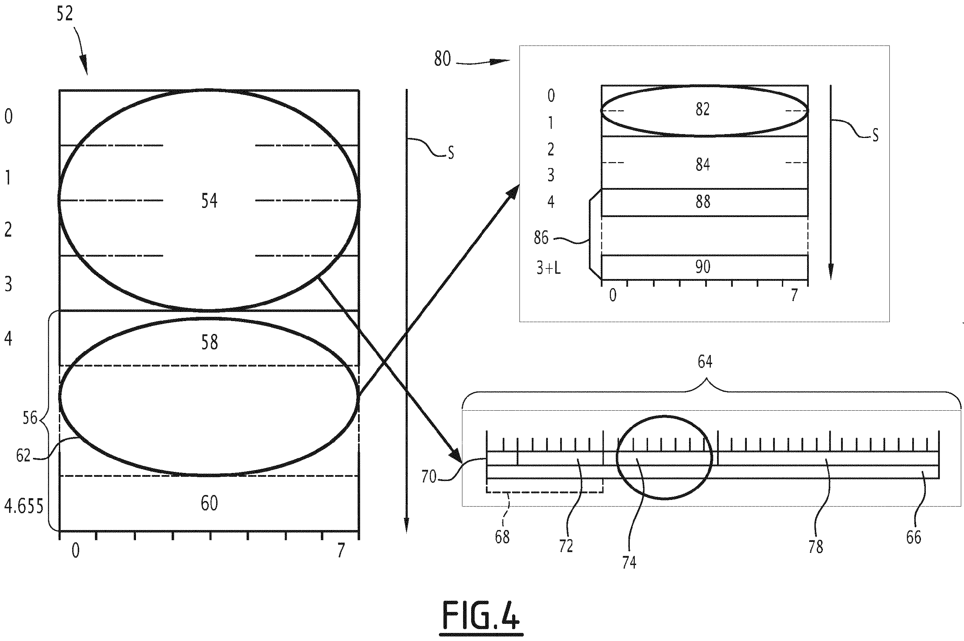

Une trame de communication 52 est illustrée par la figure 4 selon le sens S de transmission des octets de données binaires de bas en haut.

Une telle trame comprend une partie en-tête 54 et une partie 56 dédiée à la transmission des données utiles comprenant un premier octet 58, des octets intermédiaires et un dernier octet 60 de données, le premier octet 58 et les octets intermédiaires formant une sous-partie 62 de la partie 56 dédiée à la transmission des données utiles.

Lorsque le protocole d'interconnexion entre la tête radio à distance 18_{A} et lesdites au moins deux unités de traitement en bande de base est un protocole RoE du type IEEE 19xx Radio Over Ethernet, les critères de répartition de trafic sont définis au sein de la partie en-tête 54.

La structure de la partie en-tête 54 est détaillée sur la vue 64 et comprend un champ 66 dédié à un numéro de séquence , deux premiers champs successifs formant les octets 68 de données utiles de l'en-tête comprenant un champ 70 précisant le numéro de version du protocole de communication utilisé, un champ 72 précisant le type de paquet de données, un champ 74 d'identification de flux « flowlD » classiquement laissé à la libre implémentation, et un champ 78 dédié à l'indication de la longueur (i.e. taille) de paquet.

Lorsque le protocole d'interconnexion entre la tête radio à distance 18_{A} et lesdites au moins deux unités de traitement en bande de base est un protocole évolué d'interface de radio publique commune eCPRI (de l'anglais *evolved Common Public Radio Interface*), les critères de répartition de trafic sont définis au sein de la sous-partie 62 comprenant notamment le premier octet 58.

La structure de la sous-partie 62 est détaillée sur la vue 80 et comprend un champ 82 appelé PC_ID et classiquement laissé à la libre implémentation selon le standard eCPRI, un champ 84 SEQ_ID, un ensemble 86 de L octets de données, L étant un entier prédéterminé, comprenant notamment un premier octet 88 et un deuxième octet 90.

Selon une première alternative de l'invention, lorsque le protocole d'interconnexion entre la tête radio à distance 18_{A} et lesdites au moins deux unités de traitement en bande de base est un protocole RoE du type IEEE 19xx Radio Over Ethernet, la tête radio à distance, par exemple 18_{A}, met en oeuvre une répartition de trafic, via le commutateur 48 de la figure 3 ou via des ports distincts en définissant les critères de répartition de trafic, dans le champ 74 flowlD de l'en-tête de trame de communication RoE, par un identifiant utilisateur et/ou par un identifiant d'application.

Autrement dit, selon cette première alternative la présente invention propose une tête radio à distance « intelligente » propre à utiliser le champ 74 flowlD classiquement laissé à la libre implémentation pour mettre en oeuvre une répartition de trafic de données.

Selon une deuxième alternative de l'invention, lorsque le protocole d'interconnexion entre la tête radio à distance 18_{A} et lesdites au moins deux unités de traitement en bande de base est un protocole eCPRI, la tête radio à distance, par exemple 18_{A}, met en oeuvre une répartition de trafic, via le commutateur 48 de la figure 3 ou via des ports distincts en définissant les critères de répartition de trafic, dans le champ 82 PC_ID de l'en-tête de chaque paquet de données binaires transmis au sein de la trame de communication eCPRI, par un identifiant utilisateur et/ou par un identifiant d'application.

Autrement dit, selon cette deuxième alternative la présente invention propose une tête radio à distance « intelligente » propre à utiliser le champ 74 flowlD classiquement laissé à la libre implémentation pour mettre en oeuvre une répartition de trafic de données.

Il est à noter que selon l'invention un même utilisateur est propre à requérir une transmission de données (i.e. d'information), associée par exemple à une application multimédia, traitée localement au moyen de l'unité de traitement de bande de base et du coeur de réseau du site radio où est présent l'utilisateur, et également une transmission de données (i.e. d'information), associée à des données spécifiques et sécurisées destinées et/ou émises par un poste de commandement, au moyen de l'unité de traitement de bande de base d'un site radio distant du site radio où est présent l'utilisateur.

Ainsi, selon la présente invention, l'homme du métier comprendra qu'il est proposé de remplacer une séparation de trafics 30 et 32 d'information en fonction de leur nature mise en oeuvre au niveau IP tel qu'illustré par la figure 1, par une séparation de trafics 44 et 32 au niveau de la bande de base, notamment entre la bande de base et la tête radio à distance RRH.

Autrement dit, le système de communication 40 selon la présente invention propose de bénéficier de briques technologiques permettant d'implémenter la séparation des trafics 44 et 32 à un niveau différent du niveau de séparation mis en oeuvre au sein du système de communication 10 de la figure 1.

Avantageusement, l'homme du métier comprendra que selon la présente invention illustrée par le système de communication 40 de la figure 2, hormis au sein des têtes radio à distance 18_{A} et 18c respectivement des sites radio 14_{A} et 14_{C} les chemins de communication 44 et 32 restent disjoints au sein du réseau d'interconnexion 12 ce qui permet de réduire le dimensionnement des coeurs de réseau 24_{A} et 24_{C}, mais également des unités de traitement en bande de base 20_{A} et 20_{C} et des routeurs 26_{A} et 26_{C} des sites radio dépourvus de poste de commandement notamment pour une radio/intégration véhiculaire.

Une telle optimisation du dimensionnement permet d'obtenir des solutions compactes et par conséquent une dissémination de ces solutions de ces solutions de communications dans des véhicules plus légers.

Par ailleurs, d'un point de vue sécurité, le trafic d'informations spécifiques et sécurisées, émises par, ou destinées à un poste de commandement, telle que des informations associées à des échanges spécifiques selon le système C4I^{®} est protégé d'une intrusion malveillante locale car transporté en bande de base de la tête radio à distance 18_{A} et/ou 18c au faisceau hertzien sans repasser par les couches IP locales du coeur de réseau localisé en pied de mât.

Enfin, un tel système de communication 40 selon la présente invention illustré par la figure 2 présente une résilience améliorée. En effet, en cas de défaillance de l'unité de traitement en bande de base 20 ou du coeur de réseau 24 d'un site radio 14, le présent système de communication 40 permet de s'appuyer sur les ressources d'un site radio distant.

## Revendications

1. Système de communication (40) comprenant un réseau d'interconnexion (10) et une pluralité de sites radio (14_{A}, 14_{B}, 14_{C}) interconnectés via le réseau d'interconnexion (12),
**caractérisé en ce qu'**au moins un site radio (14_{A}, 14_{C}) comprend au moins une première station de base (16_{A}, 16_{C}) dont une tête radio à distance (18_{A}, 18c) est interconnectée à au moins deux unités de traitement en bande de base (20_{A}, 20_{B}, 20_{C}),
la tête radio à distance (18_{A}) de la première station de base (16_{A}), interconnectée à au moins deux unités de traitement en bande de base (20_{A}, 20_{B}, 20_{C}), étant localisée en haut de mât de ladite première station de base (16_{A}), une première unité de traitement en bande de base (20_{A}) desdites au moins deux unités de traitement en bande de base (20_{A}, 20_{B}, 20c) étant localisée en pied de mât de ladite première station de base(16_{A}), une deuxième unité de traitement en bande de base (20_{B}) desdites au moins deux unités de traitement en bande de base (20_{A}, 20_{B}, 20c) étant localisée en pied de mât d'une deuxième station de base (16_{B}, 16_{C}) distincte de ladite première station de base (16_{A}).

2. Système de communication (40) selon la revendication 1, dans lequel le réseau d'interconnexion (12) est un réseau Ethernet fibré et/ou un réseau Ethernet par faisceaux hertziens.

3. Système de communication (40) selon la revendication 1 ou 2, dans lequel la tête radio à distance (18_{A}) est configurée pour répartir le trafic de données de communication géré par la première station de base (16_{A}) entre la première unité de traitement en bande de base (20_{A}) et la deuxième unité de traitement en bande de base (20_{B}) en fonction de l'application de communication associée aux données de communication et/ou en fonction de l'identifiant d'un terminal de communication émetteur et/ou récepteur desdites données de communication.

4. Système de communication (40) selon la revendication 3, dans lequel la tête radio à distance (18_{A}) est configurée pour répartir le trafic de données de communication, présentant un niveau d'intégrité de sécurité le plus élevé et/ou une durée de pertinence de données la plus élevée, vers la deuxième unité de traitement en bande de base (20_{B}) localisée en pied de mât de la deuxième station de base (16_{B}) distincte de ladite première station de base (16_{A}).

5. Système de communication (40) selon la revendication 3 ou 4, dans lequel la tête radio à distance (18_{A}) est connectée en haut de mât à un commutateur et dans lequel la tête radio à distance est configurée pour répartir le trafic de données de communication géré par la première station de base via ledit commutateur.

6. Système de communication (40) selon la revendication 3 ou 4, dans lequel la tête radio à distance (18_{A}) comprend autant de ports de sortie distincts que de types d'applications de communication et/ou que de types d'identifiants de terminal en fonction desquels la répartition de trafic de donnée est mise en oeuvre.

7. Système de communication (40) selon l'une quelconque des revendications précédentes, dans lequel le protocole d'interconnexion entre la tête radio à distance et lesdites au moins deux unités de traitement en bande de base est un protocole évolué d'interface de radio publique commune eCPRI ou un protocole radio sur Ethernet RoE.

8. Système de communication (40) selon la revendication 7, dans lequel des critères de répartition de trafic sont définis, dans le champ flowlD (74) de l'en-tête de trame de communication RoE, par un identifiant utilisateur et/ou par un identifiant d'application.

9. Système de communication (40) selon la revendication 7, dans lequel des critères de répartition de trafic sont définis, dans le champ PC_ID (82) de l'en-tête de chaque paquet de données binaires transmis au sein d'une trame de communication eCPRI, par un identifiant utilisateur et/ou par un identifiant d'application.

10. Système de communication (40) selon l'une quelconque des revendications précédentes, comprenant en outre une unité de supervision (46) propre à configurer au moins la répartition de trafic de données de communication propre à être mise en oeuvre par chaque tête radio à distance (18_{A}, 18c) et par chaque unité de traitement en bande de base (20_{A}, 20_{B}, 20c) de chaque site radio (14_{A}, 14_{B}, 14_{C}) du système de communication (40).

## Patentansprüche

1. Kommunikationssystem (40), umfassend ein Verbindungsnetz (10) und eine Vielzahl von Funkstandorten (14_{A}, 14_{B}, 14_{C}), die über das Verbindungsnetz (12) miteinander verbunden sind,
**dadurch gekennzeichnet, dass** mindestens ein Funkstandort (14_{A}, 14_{C}) mindestens eine erste Basisstation (16_{A}, 16c) umfasst, wovon ein entfernter Funkkopf (18_{A}, 18c) mit mindestens zwei Basisband-Verarbeitungseinheiten (20_{A}, 20_{B}, 20c) verbunden ist, wobei der entfernte Funkkopf (18_{A}) der ersten Basisstation (16_{A}), der mit mindestens zwei Basisband-Verarbeitungseinheiten (20_{A}, 20_{B}, 20c) verbunden ist, sich an der Mastspitze der ersten Basisstation (16_{A}) befindet, eine erste Basisband-Verarbeitungseinheit (20_{A}) der mindestens zwei Basisband-Verarbeitungseinheiten (20_{A}, 20_{B}, 20c) sich an dem Mastfuß der ersten Basisstation (16_{A}) befindet, eine zweite Basisband-Verarbeitungseinheit (20_{B}) der mindestens zwei Basisband-Verarbeitungseinheiten (20_{A}, 20_{B}, 20c) sich an dem Mastfuß einer zweiten Basisstation (16_{B}, 16c) befindet, die sich von der ersten Basisstation (16_{A}) unterscheidet.

2. Kommunikationssystem (40) nach Anspruch 1, wobei das Verbindungsnetz (12) ein Faser-Ethernet-Netz und/oder ein Richtfunk-Ethernet-Netz ist.

3. Kommunikationssystem (40) nach Anspruch 1 oder 2, wobei der entfernte Funkkopf (18_{A}) konfiguriert ist, um den von der ersten Basisstation (16_{A}) verwalteten Kommunikationsdatenverkehr zwischen der ersten Basisband-Verarbeitungseinheit (20_{A}) und der zweiten Basisband-Verarbeitungseinheit (20_{B}) abhängig von der Kommunikationsanwendung, die mit den Kommunikationsdaten assoziiert ist, und/oder abhängig von der Kennung eines Kommunikationsendgeräts, das die Kommunikationsdaten sendet und/oder empfängt, zu verteilen.

4. Kommunikationssystem (40) nach Anspruch 3, wobei der entfernte Funkkopf (18_{A}) konfiguriert ist, um den Kommunikationsdatenverkehr, der ein höchstes Sicherheitsintegritätsniveau und/oder eine höchste Datenrelevanzdauer aufweist, an die zweite Basisbandverarbeitungseinheit (20_{B}) zu verteilen, die sich an dem Mastfuß der zweiten Basisstation (16_{B}) befindet, die sich von der ersten Basisstation (16_{A}) unterscheidet.

5. Kommunikationssystem (40) nach Anspruch 3 oder 4, wobei der entfernte Funkkopf (18_{A}) oben an dem Mast mit einem Schalter verbunden ist, und wobei der entfernte Funkkopf konfiguriert ist, um den von der ersten Basisstation verwalteten Kommunikationsdatenverkehr über den Schalter zu verteilen.

6. Kommunikationssystem (40) nach Anspruch 3 oder 4, wobei der entfernte Funkkopf (18_{A}) so viele separate Ausgangsanschlüsse wie Arten von Kommunikationsanwendungen und/oder Arten von Endgerätkennungen umfasst, abhängig von denen die Verteilung des Datenverkehrs implementiert wird.

7. Kommunikationssystem (40) nach einem der vorherigen Ansprüche, wobei das Protokoll für die Verbindung zwischen dem entfernten Funkkopf und den mindestens zwei Basisband-Verarbeitungseinheiten ein Protokoll evolved Common Public Radio Interface, eCPRI, oder ein Protokoll Radio-over-Ethernet, RoE, ist.

8. Kommunikationssystem (40) nach Anspruch 7, wobei Kriterien für Verkehrsverteilung in dem Feld flowID (74) des Kommunikationsrahmen-Headers RoE durch eine Benutzerkennung und/oder eine Anwendungskennung definiert sind.

9. Kommunikationssystem (40) nach Anspruch 7, wobei Kriterien für Verkehrsverteilung in dem Feld PC_ID (82) des Headers jedes innerhalb eines eCPRI-Kommunikationsrahmens übertragenen Binärdatenpakets durch eine Benutzerkennung und/oder eine Anwendungskennung definiert sind.

10. Kommunikationssystem (40) nach einem der vorherigen Ansprüche, ferner umfassend eine Überwachungseinheit (46), die geeignet ist, mindestens die Verkehrsverteilung von Kommunikationsdaten zu konfigurieren, die geeignet ist, von jedem entfernten Funkkopf (18_{A}, 18c) und von jeder Basisband-Verarbeitungseinheit (20_{A}, 20_{B}, 20c) von jedem Funkstandort (14_{A}, 14_{B}, 14_{c}) des Kommunikationssystems (40) implementiert zu werden.

## Claims

1. A communication system (40) comprising an interconnection network (10) and a plurality of radio sites (14_{A}, 14_{B}, 14_{c}) interconnected via the interconnection network (12),
**characterised in that** at least one radio site (14_{A}, 14_{c}) comprises at least one first base station (16_{A}, 16_{C}), a remote radio head (18_{A}, 18_{C}) of which is interconnected to at least two baseband processing units (20_{A}, 20_{B}, 20c), the remote radio head (18_{A}) of the first base station (16_{A}), interconnected to at least two baseband processing units (20_{A}, 20_{B}, 20c), being located at the top of the mast of said first base station (16_{A}) a first baseband processing unit (20_{A}) of said at least two baseband processing units (20_{A}, 20_{B}, 20c) being located at the mast foot of said first base station (16_{A}), a second baseband processing unit (20_{B}) of said at least two baseband processing units (20_{A}, 20_{B}, 20c) being located at the mast foot of a second base station (16_{B}, 16c) separate from said first base station (16_{A}).

2. A communication system (40) according to claim 1, wherein the interconnection network (12) is a fibre Ethernet network and/or a microwave Ethernet network.

3. A communication system (40) according to claim 1 or 2, wherein the remote radio head (18_{A}) is configured to distribute communication data traffic handled by the first base station (16_{A}) between the first baseband processing unit (20_{A}) and the second baseband processing unit (20_{B}) in dependence on the communication application associated with the communication data and/or in dependence on the identifier of a communication terminal transmitting and/or receiving said communication data.

4. A communication system (40) according to claim 3, wherein the remote radio head (18_{A}) is configured to distribute communication data traffic, having a highest security integrity level and/or highest data relevance time, to the second baseband processing unit (20_{B}) located at the masthead of the second base station (16_{B}) separate from said first base station (16_{A}).

5. A communication system (40) according to claim 3 or 4, wherein the remote radio head (18_{A}) is connected at the top of the mast to a switch and wherein the remote radio head is configured to distribute communication data traffic handled by the first base station via said switch.

6. A communication system (40) according to claim 3 or 4, wherein the remote radio head (18_{A}) comprises as many separate output ports as there are types of communication applications and/or types of terminal identifiers according to which data traffic distribution is implemented.

7. A communication system (40) according to any one of the preceding claims, wherein the interconnection protocol between the remote radio head and said at least two baseband processing units is an advanced common public radio interface protocol eCPRI or a radio over Ethernet protocol RoE.

8. A communication system (40) according to claim 7, wherein traffic distribution criteria are defined, in the flowID field (74) of the communication frame header RoE, by a user identifier and/or by an application identifier.

9. A communication system (40) according to claim 7, wherein traffic distribution criteria are defined, in the PC_ID field (82) of the header of each binary data packet transmitted within an eCPRI communication frame, by a user identifier and/or an application identifier.

10. A communication system (40) according to any one of the preceding claims, further comprising a supervisory unit (46) adapted to configure at least the distribution of communication data traffic to be implemented by each remote radio head (18_{A}, 18c) and by each baseband processing unit (20_{A}, 20_{B}, 20c) of each radio site (14_{A}, 14_{B}, 14_{c}) of the communication system (40).
